# EUROPEAN PATENT SPECIFICATION

(11) **EP 3 431 840 B1**
(45) Date of publication and mention of the grant of the patent: **23.09.2020**
(21) Application number: 17182296.8
(22) Date of filing: 20.07.2017
(51) Int. Cl.: F16K 1/42, F16K 1/44, F16K 11/16, F01D 17/14

(54) **VALVE ARRANGEMENT FOR FLUID POWER EQUIPMENT**
VENTILANORDNUNG FÜR EINE FLUIDTECHNISCHE ANLAGE
AGENCEMENT DE SOUPAPE POUR UN ÉQUIPEMENT D'ALIMENTATION DE FLUIDE

(43) Date of publication of application: 23.01.2019
(73) Proprietor: Siemens Aktiengesellschaft, 80333 München (DE)
(72) Inventor: KUMAR, Gaurav, 110070 New Delhi (IN); SINGH, Paramdeep, 110058 Delhi (IN); TRIPATHI, Nidhi, 110075 Delhi (IN)
(74) Representative: Patentanwaltskanzlei WILHELM & BECK

(56) References cited:
- WO-A1-2005/083309
- DE-C- 835 448
- JP-A- 2002 188 732
- US-A- 1 076 446
- US-A- 3 857 408
- US-A- 4 314 585
- US-A- 5 483 991

## Description

The present invention relates to a valve arrangement for fluid power equipment, such as, a steam turbine. More particularly the present invention relates to a leak-free valve arrangement for fluid power equipment that controls flow of the fluid, such as, steam into the steam turbine.

Fluid power equipment, such as, steam turbines employed in power plants, for example, thermoelectric power plants, nuclear power plants, or the like, typically employ valve arrangements, in order to regulate flow of steam according to load changes or to stop the flow of steam altogether. Such valve arrangements typically constitute single seated valve arrangements and double seated valve arrangements. A single seated valve arrangement, typically, employs one or more actuators and these are required to be operated at high pressures for circulating pressurized fluid such as oil through the actuators. Moreover, the single seated valve arrangement involves complex piping design and is therefore, not only cumbersome in construction but also a costly arrangement.

A double seated valve arrangement typically supports regulation of large volumes of fluid at a comparatively lower actuating force than the single seated valve arrangement. The double seated valve arrangement conventionally involves a pair of valve discs mutually separated from one another by a predefined distance, and designed to rest against a pair of valve seats during shut-off operation. However, in practicality manufacturing of a valve arrangement typically fails to achieve the precision desired, due to which positioning of valve seats within a valve arrangement is such that the valve discs fail to simultaneously rest on both the valve seats. Moreover, the valve discs fail to completely rest against the valve seats, thereby failing to provide a secure sealing at at least one of the valve seats, which further results in an unwanted leakage of the steam leading to an uncontrolled steam turbine operation. Therefore, despite of the advantages that a double seated valve arrangement poses over a single seated valve arrangement, the double seated valve arrangement remains largely unused due to non leak-free operation leading to failure of compliance with certain industry standards, for example, standards set by the American Petroleum Institute for steam turbines. From document DE 835 448 C a valve-seat assembly for outlet-valves of tank cars is known. From document JP 2002 188732 A a fluid control valve is known. From document US 5 483 991 A a valve with self-centering seat is known. From document US 3 857 408 A a seat and sealing means for clapper-type check valve is known. From document WO 2005/083309 A1 leak resistant solenoid valves are known. From document US 4 314 585 A a proportional type electromagnetic valve is known.

Therefore, it is an object of the present invention to provide a valve arrangement to be employed, for example, in a fluid power equipment of the aforementioned kind, wherein the valve arrangement is simple in design, is cost effective, and ensures leak-free operation within the fluid power equipment.

The valve arrangement disclosed in the present invention achieves the aforementioned object, in that the valve arrangement comprises an elastic member biasable by the valve seats for secure closing of the valve discs bearing against the valve seats.

According to the present invention, a valve arrangement is provided. According to a preferred embodiment of the present invention, the valve arrangement is provided for fluid power equipment to control flow of fluid into the fluid power equipment. According to this preferred embodiment, the valve arrangement is positioned such that it is aligned to be in direction of the flow of the fluid. As used herein, "fluid power equipment" refers to turbomachinery, for example, a steam turbine.

The valve arrangement disclosed herein, includes a housing. As used herein, the term "housing" refers to a valve chest unit enclosing a moveable member, at least one valve head, at least one valve seat, and an elastic member, of the valve arrangement. According to a preferred embodiment of the present invention, the housing is operably connected to a control mechanism of the turbomachinery, for operation of the valve arrangement, such that an outlet port of the housing is in connection with an inlet casing of a steam turbine and an inlet port of the housing is in connection with a steam inlet pipe of the steam turbine. The moveable member of the valve arrangement is displaceable inside the housing. The moveable member includes a spindle that axially reciprocates back and forth inside the housing, due to an actuating mechanism operably connected to the spindle. At least one valve head is positioned on the moveable member. The valve head is positioned axially orthogonal to the moveable member. At least one valve seat is positioned within the housing, for example, bearing against one or more inner surfaces of the housing. The valve head is displaceable between a closed position and an open position. As used herein, "closed position" refers to a position when the valve head is bearing against the valve seat.

The closed position indicates a shut-off operation of the valve arrangement, wherein, fluid passing through the valve arrangement is completely stopped. As used herein, "open position" refers to a position when valve head axially clears from the valve seat, that is, displaces away from the valve seat thereby, allowing fluid to flow through the valve arrangement.

The elastic member of the valve arrangement, is positioned within the housing such that the elastic member, at least partially, bears against the housing, for example, one or more inner surfaces of the housing. The elastic member is biasable by the valve seat, in the closed position. According to a preferred embodiment of the present invention, the valve seat is slidably attached to the housing, such that the valve seat is laterally displaceable towards the valve head due to the elastic member. The housing acts as a counter bearing for biasing the elastic member. In the closed position of the valve arrangement, the moveable member is actuated and the displaceable valve head moves towards the valve seat thereby establishing contact with the valve seat and biasing, that is, compressing the elastic member positioned between the valve seat and the housing. The biased elastic member resists this compression by exerting an opposing force on the valve seat and pushing the valve seat away from the housing, towards the valve head. The elastic member, thus, establishes a secure contact between the valve seat and the valve head in the closed position of the valve arrangement. The elastic member is selected from a group consisting of linear springs and nonlinear springs. The selection of elastic member is based on one or more parameters associated with the valve arrangement, for example, a pressure of fluid passing through the valve arrangement, an amount of force exerted by the valve head due to the actuating mechanism of the moveable member, physical dimensions of the housing, physical dimensions of the valve seat, etc. Advantageously, the elastic member comprises one or more disc springs which are easily available and are suited for majority of applications that require a high force to be exerted on a minor deflection of the spring.

According to the present invention, the valve arrangement is a double seated valve arrangement comprising two valve heads and two valve seats. The valve heads are connected via a flexible member allowing each of the valve heads to axially align with the valve seats in the closed position of the valve arrangement. The elastic member, at least partially, bears against the housing and is biasable by one of the valve seats, when in the closed position. The elastic member is positioned proximal to one of these valve seats. Advantageously, one of the valve seats, that is, the one which is biasing the elastic member, is configured to have smaller physical dimensions than the other valve seat. This facilitates an increase in design flexibility and provides ease of assembly of the valve arrangement. Advantageously, the smaller valve seat is configured to slidably attach to the housing for establishing secure contact with the valve head in the closed position of the valve arrangement. According to another embodiment of the present invention, multiple valve arrangements, for example, double seated valve arrangements as disclosed herein, are connected in a cascade, via a cascading member and wherein one of the valve seats for each valve arrangement, comprises an elastic member biasable by the respective valve seats. The cascading member allows each of the valve arrangements to sequentially attain an open position and a closed position. Advantageously, the sequential operation of the cascaded valve arrangements enables control of multiple load points in a turbomachinery.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: illustrates a sectional elevation view of a double seated valve arrangement for a steam turbine as an embodiment of the valve arrangement according to the present invention.
- FIGS 2A-2B: illustrate sectional elevation views of the double seated valve arrangement shown in FIG 1 in an open position and a closed position of operation, according to an embodiment of the present invention.
- FIG 3: illustrates a sectional elevation view of a valve arrangement having a pair of double seated valve arrangements connected in series, according to an embodiment of the present invention.
- FIG 4: illustrates a sectional elevation view of a single seated valve arrangement as an example of a valve arrangement not making part of the present invention.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

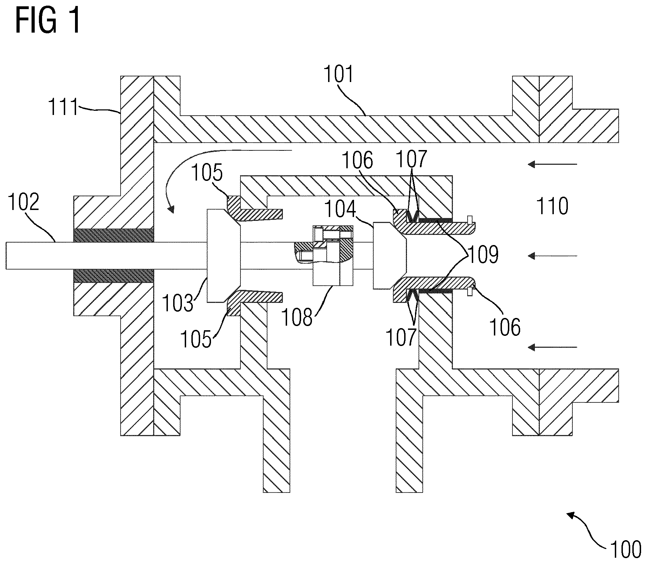

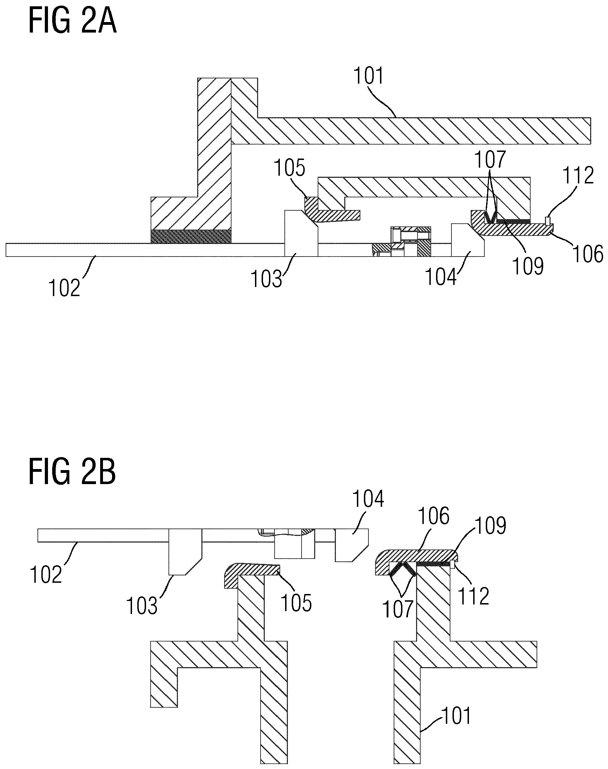

FIG 1 illustrates a sectional elevation view of a double seated valve arrangement 100 for a steam turbine (not shown) having steam flowing therein in a direction shown by the flow arrows 110, as an embodiment of the valve arrangement according to the present invention. As illustrated in FIG 1, the double seated valve arrangement 100 comprises a housing 101 in connection with flanges 111 of an actuating mechanism (not shown), a moveable member 102, valve heads 103 and 104, mutually spaced from one another and connected via a flexible member 108, valve seats 105 and 106, and elastic members 107 biasable by the valve seat 106. The moveable member 102 is displaceable inside the housing 101 by the actuating mechanism, between a closed position and an open position of the double seated valve arrangement 100 illustrated in FIGS 2A-2B. The valve seat 106 is slidably attached to the housing 101, via a sealing member 109 such that the valve seat 106 is laterally displaceable in a direction towards or away from the valve head 104 based on biasing and un-biasing of the elastic member 107.

FIGS 2A-2B illustrate sectional elevation views of the double seated valve arrangement 100 shown in FIG 1 in an open position and a closed position of operation, according to an embodiment of the present invention. In the closed position, the valve heads 103 and 104 are bearing against the valve seats 105 and 106 respectively. In the open position, the valve heads 103 and 104 are axially cleared from the valve seats 105 and 106. Assuming, a default state of operation of the double seated valve arrangement 100 is the closed position, as shown in FIG 2A, where the elastic member 107 is in a biased state, that is, a compressed state. In the closed position of the double seated valve arrangement 100, the valve head 103 bears against the valve seat 105 and the valve head 104 bears against the valve seat 106 and biases the elastic member 107 to a compressed state. In this biased state, the valve seat 106 initially moves towards the housing 101 as a result of displacement of the moveable member 102, however, the elastic member 107 exerts an opposing force to resist movement of the valve seat 106 towards the housing 101, thereby, ensuring a secure connection of the valve seat 106 with the valve head 104. FIG 2B illustrates an open position of the double seated valve arrangement 100, wherein the moveable member 102 axially retracts thereby, clearing the valve heads 103 and 104 off the valve seats 105 and 106 respectively, and returning the elastic member 107 to its unbiased, that is, an uncompressed state. In this open position the valve seat 106 slides, along the sealing member 109, further away from the housing 101, as the elastic member 107 becomes completely uncompressed. A stopper member 112 precludes the valve seat 106 from sliding off the housing 101.

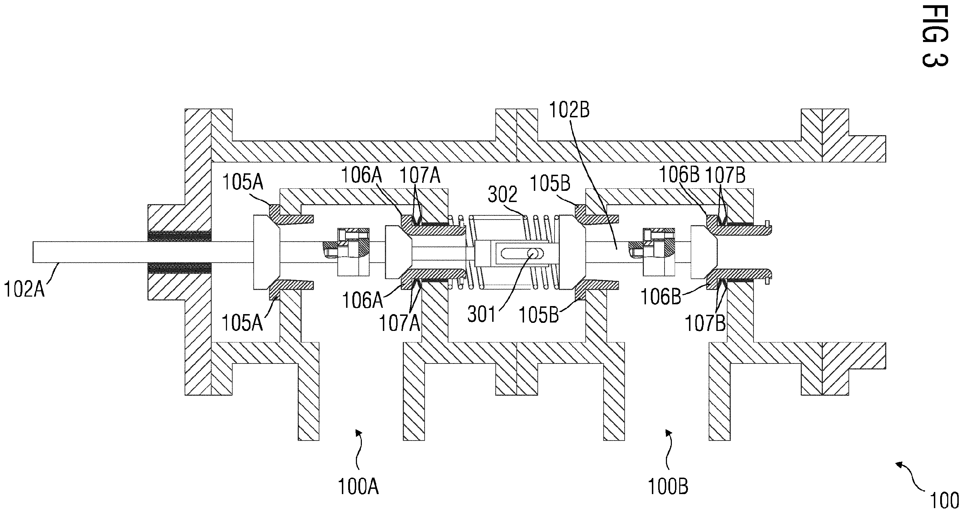

FIG 3 illustrates a sectional elevation view of a valve arrangement 100 having a pair of double seated valve arrangements 100A and 100B connected in series, according to an embodiment of the present invention. The double seated valve arrangements 100A and 100B each are constructed as disclosed in the detailed description of FIG 1 and are connected in cascade, via a cascading member 301. A spindle spring 302 connects each of the moveable members 102A and 102B of the double seated valve arrangements 100A and 100B respectively. The valve seats 106A and 106B for each double seated valve arrangement 100A and 100B comprise an elastic member 107A and 107B biasable by the respective valve seats 106A and 106B.

The cascading member 301 allows the double seated valve arrangements 100A and 100B to attain open and closed positions sequentially. A sequential opening and closing of the double seated valve arrangements 100A and 100B enables control of multiple load points in a steam turbine. Assume that the double seated valve arrangements 100A and 100B both are in their closed positions respectively as shown in FIG 3. In a sequential opening operation, the moveable member 102A retracts in a direction away from the valve seats 105A and 106A, to a first predefined position due to which the double seated valve arrangement 100A attains an open position keeping the double seated valve arrangement 100B in the closed position. Further, the moveable member 102A retracts further to a second predefined position thereby, displacing the moveable member 102B in a direction away from the valve seats 105B and 106B due to which the double seated valve arrangement 100B also attains an open position. Similarly, in a sequential closing operation, the moveable member 102A moves axially forward to the first predefined position. The spindle spring 302 pushes the moveable member 102B so that the double seated valve arrangement 100B attains a closed position maintaining the double seated valve arrangement 100A in its open position. The moveable member 102A further moves axially forward to its initial position such that the double seated valve arrangement 100A also attains a closed position. Such a cascaded arrangement provides flexibility of design of the valve arrangement 100 and enables operation of multiple double seated valve arrangements 100A and 100B.

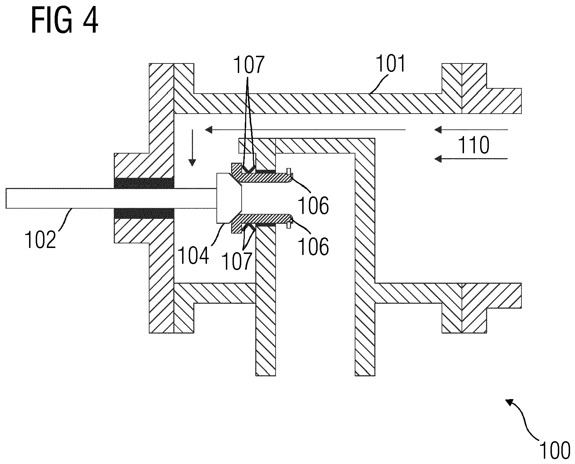

FIG 4 illustrates a sectional elevation view of a single seated valve arrangement 100 as an embodiment of the valve arrangement according to the present invention. The single seated valve arrangement 100 comprises a housing 101, a moveable member 102 displaceable inside the housing 101, one valve head 104 positioned on the moveable member 102 and displaceable between a closed position when the valve head 104 is bearing against a valve seat 106 positioned within the housing 101, and an open position when the valve head 104 is axially cleared from the valve seat 106. The single seated valve arrangement 100 also includes an elastic member 107 at least east partially bearing against the housing 101 and biasable by the valve seat 106 in the closed position. The elastic member 107 establishes a secure contact between the valve seat 106 and the valve head 104 in the closed position, thereby, precluding uncontrolled flow of steam into the single seated valve arrangement 100, in a direction shown by the flow arrows 110.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may affect numerous modifications thereto and changes may be made without departing from the scope of the invention which is solely defined by the appended claims.

## Claims

1. A valve arrangement (100) having:
- a housing (101);
- a moveable member (102) displaceable inside the housing (101) ;
- at least one valve head (103, 104) positioned on the moveable member (102) and displaceable between a closed position when said at least one valve head (103, 104) is bearing against at least one valve seat (105, 106) positioned within the housing (101), and an open position when said at least one valve head (103, 104) is axially cleared from said at least one valve seat (105, 106);
- a double seated valve arrangement comprising two valve heads (103, 104) and two valve seats (105, 106), wherein the two valve heads (103, 104) are arranged and configured to be positioned in the closed position simultaneously, wherein the valve heads (103, 104) are connected via a flexible member (108),
**characterized in that**
the valve arrangement further has an elastic member (107), at least partially, bearing against the housing (101) and biasable by said at least one valve seat (105, 106) in the closed position, wherein said elastic member (107) establishes a secure contact between said at least one valve seat (105, 106) and said at least one valve head (103, 104) in the closed position,
and **in that** the flexible member (108) is configured to axially align the valve heads (103, 104) with the valve seats (105, 106) in the closed position.

2. The valve arrangement (100) according to claim 1, wherein said at least one valve seat (105, 106) is slidably attached to said housing (101), such that said at least one valve seat (105, 106) is laterally displaceable towards said at least one valve head (103, 104) due to the elastic member (107).

3. The valve arrangement (100) according to any one of the previous claims, wherein the elastic member (107) is selected from a group consisting of linear springs and non linear springs.

4. The valve arrangement (100) according to claim 3, wherein the elastic member (107) comprises one or more disc springs.

5. The valve arrangement (100) according to claim 1, **characterized by** an elastic member (107), at least partially, bearing against the housing (101) and biasable by one of the two valve seats (105 or 106), when in the closed position.

6. The valve arrangement (100) according to any one of the claims 4 and 5, wherein one of the valve seats (105 or 106) is configured to have smaller physical dimensions than the other valve seat (105 or 106).

7. A fluid power equipment comprising a valve arrangement (100) of the claims 1-6 for controlling flow of fluid into the fluid power equipment, wherein the valve arrangement (100) is arranged in direction of the fluid flow.

8. The fluid power equipment according to claim 7 is a steam turbine.

## Patentansprüche

1. Ventilanordnung (100), die Folgendes aufweist:
- ein Gehäuse (101);
- ein bewegliches Element (102), das im Gehäuse (101) verschiebbar ist;
- mindestens einen Ventilkopf (103, 104), der auf dem beweglichen Element (102) angeordnet und zwischen einer geschlossenen Stellung, wenn der mindestens eine Ventilkopf (103, 104) an mindestens einem innerhalb des Gehäuses (101) angeordneten Ventilsitz (105, 106) anliegt, und einer geöffneten Stellung, wenn der mindestens eine Ventilkopf (103, 104) axial aus dem mindestens einen Ventilsitz (105, 106) entfernt ist, beweglich ist;
- eine Doppelsitzventilanordnung, die zwei Ventilköpfe (103, 104) und zwei Ventilsitze (105, 106) umfasst, wobei die zwei Ventilköpfe (103, 104) dazu angeordnet und ausgelegt sind, gleichzeitig in der geschlossenen Stellung angeordnet zu werden,
wobei die Ventilköpfe (103, 104) über ein flexibles Element (108) miteinander verbunden sind,
**dadurch gekennzeichnet, dass**
die Ventilanordnung ferner ein elastisches Element (107) aufweist, das an dem Gehäuse (101) anliegt und von dem mindestens einen Ventilsitz (105, 106) in die geschlossene Stellung vorspannbar ist, wobei das elastische Element (107) in der geschlossenen Stellung einen sicheren Kontakt zwischen dem mindestens einen Ventilsitz (105, 106) und dem mindestens einen Ventilkopf (103, 104) aufbaut,
und dadurch, dass das flexible Element (108) dazu ausgelegt ist, die Ventilköpfe (103, 104) in der geschlossenen Stellung axial mit den Ventilsitzen (105, 106) auszurichten.

2. Ventilanordnung (100) nach Anspruch 1, wobei der mindestens eine Ventilsitz (105, 106) verschiebbar am Gehäuse (101) befestigt ist, sodass der mindestens eine Ventilsitz (105, 106) aufgrund des elastischen Elements (107) in Richtung des mindestens einen Ventilkopfes (103, 104) lateral verschiebbar ist.

3. Ventilanordnung (100) nach einem der vorstehenden Ansprüche, wobei das elastische Element (107) aus einer Gruppe ausgewählt ist, die aus linearen Federn und nicht linearen Federn besteht.

4. Ventilanordnung (100) nach Anspruch 3, wobei das elastische Element (107) eine oder mehrere Tellerfedern umfasst.

5. Ventilanordnung (100) nach Anspruch 1, **gekennzeichnet durch** ein elastisches Element (107), das zumindest teilweise am Gehäuse (101) anliegt und in der geschlossenen Stellung von einem der zwei Ventilsitze (105 oder 106) vorspannbar ist.

6. Ventilanordnung (100) nach einem der Ansprüche 4 und 5, wobei einer der Ventilsitze (105 oder 106) dazu ausgelegt ist, kleinere physische Abmessungen als der andere Ventilsitz (105 oder 106) aufzuweisen.

7. Fluidkraftanlage, die eine Ventilanordnung (100) nach einem der Ansprüche 1-6 zur Steuerung der Fluidströmung in die Fluidkraftanlage umfasst, wobei die Ventilanordnung (100) in Fluidströmungsrichtung angeordnet ist.

8. Fluidkraftanlage nach Anspruch 7, die eine Dampfturbine ist.

## Revendications

1. Agencement de soupape (100) comportant :
un logement (101) ;
un organe mobile (102) pouvant se déplacer à l'intérieur du logement (101) ;
au moins une tête de soupape (103, 104) positionnée sur l'organe mobile (102) et pouvant se déplacer entre une position fermée lorsque ladite au moins une tête de soupape (103, 104) repose contre au moins un siège de soupape (105, 106) positionné à l'intérieur du logement (101), et une position ouverte lorsque ladite au moins une tête de soupape (103, 104) est dégagée axialement dudit au moins un siège de soupape (105, 106) ;
un agencement de soupape à double siège comprenant deux têtes de soupape (103, 104) et deux sièges de soupape (105, 106), dans lequel les deux têtes de soupape (103, 104) sont agencées et conçues pour être positionnées simultanément dans la position fermée, dans lequel les têtes de soupape (103, 104) sont reliées par le biais d'un organe flexible (108),
**caractérisé en ce que** l'agencement de soupape comprend en outre un organe élastique (107), reposant au moins en partie contre le logement (101) et pouvant être sollicité par ledit au moins un siège de soupape (105, 106) dans la position fermée, dans lequel ledit organe élastique (107) établit un contact sécurisé entre ledit au moins un siège de soupape (105, 106) et ladite au moins une tête de soupape (103, 104) dans la position fermée,
et **en ce que** l'organe flexible (108) est conçu pour s'aligner axialement dans les têtes de soupape (103, 104) avec les sièges de soupape (105, 106) dans la position fermée.

2. Agencement de soupape (100) selon la revendication 1, dans lequel ledit au moins un siège de soupape (105, 106) est fixé de façon coulissante audit logement (101), de sorte que ledit au moins un siège de soupape (105, 106) peut être déplacé latéralement en direction de ladite au moins une tête de soupape (103, 104) au moyen de l'organe élastique (107).

3. Agencement de soupape (100) selon l'une quelconque des revendications précédentes, dans lequel l'organe élastique (107) est sélectionné parmi un groupe constitué de ressorts linéaires et de ressorts non linéaires.

4. Agencement de soupape (100) selon la revendication 3, dans lequel l'organe élastique (107) comprend un ou plusieurs ressorts à disques.

5. Agencement de soupape (100) selon la revendication 1, **caractérisé par** un organe élastique (107) reposant au moins en partie contre le logement (101) et pouvant être sollicité par l'un des deux sièges de soupape (105 ou 106) dans la position fermée.

6. Agencement de soupape (100) selon l'une quelconque des revendications 4 et 5, dans lequel l'un des sièges de soupape (106 ou 106) est conçu pour présenter des dimensions physiques inférieures à celles de l'autre siège de soupape (105 ou 106).

7. Équipement hydraulique comprenant un agencement de soupape (100) selon l'une quelconque des revendications 1 à 6 destiné à commander l'écoulement d'un fluide dans l'équipement hydraulique, dans lequel l'agencement de soupape (100) est disposé dans la direction de l'écoulement de fluide.

8. Équipement hydraulique selon la revendication 7, dans lequel l'équipement hydraulique est une turbine à vapeur.
